# EUROPÄISCHE PATENTSCHRIFT

(11) **EP 0 841 516 B1**
(45) Veröffentlichungstag und Bekanntmachung des Hinweises auf die Patenterteilung: **17.05.2000**
(21) Anmeldenummer: 96117905.8
(22) Anmeldetag: 08.11.1996
(51) Int. Cl.: F17D 5/06, G01M 3/18

(54) **Elektronische Messeinrichtung zur Erfassung von Undichtigkeiten von Dichtungen für flüssige Medien**
Electronic measuring device for detecting leaks in sealing rings for liquid products
Dispositif de mesure électronique pour la détection de fuites dans le joints d'étanchéité pour produits liquides

(43) Veröffentlichungstag der Anmeldung: 13.05.1998
(73) Patentinhaber: Friedrich, Karl Heinz, 68163 Mannheim (DE)
(72) Erfinder: Friedrich, Karl Heinz, 68163 Mannheim (DE)
(74) Vertreter: Zellentin, Wiger, Dipl.-Ing.

(56) Entgegenhaltungen:
- DE-U- 9 320 143
- US-A- 5 090 871

## Beschreibung

Die Erfindung betrifft eine elektronische Meßeinrichtung zur Erfassung von Undichtigkeiten von statischen oder dynamischen Dichtungen zur Abgrenzung gegenüber flüssigen Medien, gemäß dem Oberbegriff des Anspruchs 1.

### Stand der Technik:

Undichte, flüssigkeitsführende Leitungen, wie Abwasserkanäle oder Ölpipelines, stellen eine Gefahr für die Umwelt dar, weshalb die Verpflichtung immer dringender ist, Boden und Grundwasser vor Verunreinigungen zu schützen bzw. sie zu verhindern. Bei steckbaren Rohrsystemen wird durch Zwischenfügen einer Dichtung eine hermetische Abgrenzung des flüssigen Mediums gegen das Umfeld angestrebt. Durch Alterungsprozesse der Dichtung, aber auch durch äußere mechanische Einwirkungen, wie z.B. Senkungen im Erdreich oder Einwachsen von Pflanzenwurzeln, bleibt die Verbindungsstelle zweier Rohre bei einem steckbaren Rohrsystem immer eine Schwachstelle.

Die bekannten Prüfmethoden zur Überprüfung von Leckagen in Rohrleitungssystemen, nämlich Druck- und Körperschallmessungen oder die visuelle Überprüfung haben den Nachteil, daß keine permanente Überwachung erfolgen kann. Weiterhin ist bei den erwähnten Verfahren u. U. eine Reinigung des zu untersuchenden Rohrabschnittes notwendig.

Die visuelle Überprüfung findet in begehbaren Kanälen durch geschultes Personal statt. Wo eine Begehung nicht möglich ist, kommen Kamerafernaugen zum Einsatz, die sich von einem Meßwagen aus über ein Verbindungskabel fernsteuern lassen. Beide Methoden können nur bei leeren oder teilweise gefüllten Rohren stattfinden und lediglich markante Fehler, wie Wurzeleinwüchse oder Rohrversatz, durch Senkungen im Erdreich feststellen. Undichtigkeiten im Muffenbereich bleiben in der Regel verborgen.

Bei der Körperschallmessung werden mechanische Schwingungen in ein Rohr eingekoppelt. Die gemessenen Reflexionen des Schalls lassen Rückschlüsse auf den Zustand des untersuchten Rohres zu. Diese Methode vermag zwar Risse und Brüche in den einzelnen Rohren zu detektieren, kann aber keine defekten Dichtungen im Muffenbereich aufspüren.

Bei der Druckprüfung wird der zu untersuchende Kanalabschnitt abgeschottet, mit Luft oder Wasser gefüllt und mit einem Druck zwischen 0,3 und 0,5 bar beaufschlagt. Dabei besteht, vor allem bei älteren Rohrsystemen die Gefahr, daß durch die mechanische Beanspruchung Risse und somit Undichtigkeiten erst entstehen. Bei dieser Methode muß der zu untersuchende Kanalabschnitt stillgelegt werden. Die Ortsbestimmung eines Lecks ist relativ aufwendig.

Durch die DE 3441924 A1 ist eine Flüssigkeits-Leckanzeigevorrichtung in der Form eines koaxialen Kabels bekanntgeworden, die mindestens zwei elektrische Leiter aufweist, welche im wesentlichen parallel zueinander angeordnet sind und mit einer Detektorschicht, die zwischen den beiden Leitern liegt. Die Dielektrizitätskonstante der Detektorschicht wird beim Eintritt von Flüssigkeit in die Detektorschicht meßbar verändert, wobei zumindestens einer der Leiter für die Flüssigkeit durchlässig ist. Der durchlässige Leiter ist aus zumindestens einem elektrisch leitenden Element und aus zumindestens einem Element aufgebaut, welches den Durchtritt der Flüssigkeit durch diesen durchlässigen Leiter erleichtert. Dazu ist der durchlässige Leiter als Flächenkonstruktion ausgeführt, der in koaxialer Konstruktion zu dem anderen Leiter aufgebaut ist und über die Detektorschicht geflochten ist. Ebenso kann der für den Durchtritt der Flüssigkeit verantwortliche Leiter aus einem kontinuierlich porösem Kunststoffmaterial hergestellt sein.

### Technisches Aufgabe:

Der Erfindung liegt die Hauptaufgabe zugrunde, eine oder mehrere Dichtungen, vor allem aber die Verbindungsstellen oder Muffen von nichtmetallischen Rohren eines flüssigkeitsführenden Rohrleitungssystems, permanent oder zyklisch abfragend oder auch sporadisch, auf Beschädigung eines Dichtelementes zu überwachen, wobei der Ort der schadhaften Dichtung angegeben werden soll, damit die Beschädigung in kürzester Zeit behoben bzw. das defekte Leitungssystem stillgelegt werden kann.

### Offenbarung der Erfindung und deren Vorteile:

Die Lösung der Aufgabe besteht erfindungsmäßig in den Merkmalen des Anspruchs 1. Weitere vorteilhafte Ausgestaltungen der Erfindung sind in den Unteransprüchen gekennzeichnet.

Der Kern der Erfindung besteht darin, daß ein elektrischer Schwingkreis mit einer oder mehreren Dichtungen so kombiniert ist, daß er beim Kontakt mit Flüssigkeit seine elektrischen Parameter, insbesondere seine kapazitiven Anteile zu ändern imstande ist, und diese Änderung elektronisch erfaßt und ausgewertet werden kann.

Bei einem Schwingkreis, der aus einem Koaxialkabelring besteht, verdrängt eine eindringende Flüssigkeit die Luft zwischen dem Innen- und Außenleiter, worauf sich die kapazitiven Anteile des Kabels entsprechend der Dielektrizitätskonstanten des flüssigen Mediums ändern.

Bei einem Schwingkreis, der aus einer mehrlagigen Spule besteht, bilden sich zwischen den einzelnen Windungen umlaufende, im Querschnitt einem kleinen Dreieck ähnliche Röhren aus, die im trockenen Zustand mit Luft gefüllt sind. Bei Kontakt mit Flüssigkeit, saugen diese Zwischenräume aufgrund deren kapillarischen Eigenschaften die Flüssigkeit regelrecht auf. Wie auch beim Koaxialkabel ändern sich die kapazitiven Anteile des Schwingkreises entsprechend der Dielektrizitätskonstanten des flüssigen Mediums.

Falls die Dichtung metallisch nicht abgeschirmt ist, beispielsweise bei Kunststoff-, Beton- oder Steinzeugrohren, kann die Resonanzfrequenz, des mit der Dichtung kombinierten Schwingkreises, mit Hilfe einer Meßelektronik induktiv erfaßt werden. Dadurch ergibt sich dieselbe Zuverlässigkeit und Funktionstüchtigkeit der Dichtungen mit integriertem Schwingkreis wie die herkömmlicher Dichtungen (ohne Schwingkreis).

Bei metallischer Abschirmung, beispielsweise bei der Abdichtung einer metallischen Kurbelwelle in einem metallischen Gehäuse, können die Schwingkreisparameter nur durch die direkte, galvanische Ankopplung an eine Meßelektronik ermittelt werden, da eine induktive Einkopplung elektrischer Energie in den Schwingkreis durch die Abschirmung verhindert wird.

Jede Dichtung verfügt zur Erfüllung ihrer Aufgabe mindestens über zwei Dichtflächen oder Dichtkanten. Dabei hat jede dieser Dichtelemente die Aufgabe, sich möglichst eng an ein Konstruktionsteil anzuschmiegen, so daß eine hermetische Abgrenzung des flüssigen Mediums erfolgt. Bei einer Leckage eines dieser Dichtelemente, tritt ein flüssiges Medium in ein zu schützendes Volumen ein (Infiltration), oder es tritt ein flüssiges Medium aus einem Volumen aus (Exfiltration).

Eine zur Verwirklichung der Erfindung verwendete Doppeldichtung besteht aus mindestens drei Dichtflächen, wobei eine im Normalfall trockene Flutungskammer geschaffen wird, in der sich ein Flüssigkeitssensor, in diesem Fall ein Schwingkreis, befindet.

Zur mechanischen Stabilisierung der Doppeldichtungen mit drei Dichtelementen, ist u.U. eine nichtmetallische Armierung in die Dichtung integriert.

Bei Doppeldichtungen mit vier Dichtelementen, wie beispielsweise einer Doppel-O-Ringdichtung, wird die Verbindung paarweise auftretenden Dichtungselemente durch einen, an den Grenzflächen nicht anliegenden Steg erreicht, der die Flutungskammer zunächst in zwei Räume unterteilt. Um wieder ein zusammenhängendes Volumen zu erhalten, wird dieser Steg durch Verbindungskanälen perforiert. Ein positiver Nebeneffekt der Doppeldichtung besteht darin, daß die Funktionstüchtigkeit der gesamten Dichtung auch dann erfüllt bleibt, wenn lediglich ein Dichtungselement beschädigt ist.

Jede Dichtung enthält weiterhin eine Einlegenut für den Schwingkreis als Flüssigkeitssensor oder einen Schwingkreisträger, der den Schwingkreis in der Dichtung fixiert.

Der Schwingkreis kommt bei einer Flutung der Dichtung, ab einer gewissen Füllhöhe, auf jeden Fall mit der eingedrungenen Flüssigkeit in Berührung, worauf sich seine elektrischen Parameter ändern.

Eine weitere Doppeldichtung zur Durchführung der Erfindung besteht in einer Doppel-Radialwellendichtung aus zwei parallel zueinander angeordneten Radialwellendichtringen, die durch eine nichtmetallische, ringförmige und im Schnitt U-förmige Armierung, die für eine Versteifung der Gesamtdichtung sorgt, verbunden sind. Die überwachbare Flutungskammer ergibt sich durch die innere Mantelfläche der Doppeldichtung bis zu den beiden Dichtkanten und der Oberfläche der drehbaren Welle. Eine Arretierung im Flutungsraum sorgt für die lokale Fixierung des eingelegten Schwingkreises. Zum Gehäuse hin erfolgt die Abgrenzung zum Flüssigkeitsraum durch eine feststehende Dichtfläche. Um Undichtigkeiten der feststehenden Dichtfläche oder Risse im Gehäuse zu erkennen, kann die Armierung zur Gehäuseseite hin perforiert sein.

Eine weitere Doppeldichtung zur Durchführung der Erfindung besteht in einer Doppel-Lippendichtung aus zwei parallel zueinander angeordneten, kreisförmigen Dichtlippen, die durch eine nichtmetallische Armierung, die für eine Versteifung der Gesamtdichtung sorgt, verbunden sind. Die Flutungskammer ergibt sich durch die innere Mantelfläche der Doppeldichtung bis zu den beiden Dichtkanten und der Oberfläche des Innenrohres. Eine Arretierung im Flutungsraum sorgt für die lokale Fixierung des eingelegten Schwingkreises. Zum Außenrohr hin erfolgt die Abgrenzung des oder der Flüssigkeitsräume durch eine äußere Dichtfläche. Um Undichtigkeiten dieser äußeren Dichtfläche oder Risse im Außenrohr zu erkennen, kann die Armierung perforiert sein.

Eine weitere Doppeldichtung zur Durchführung der Erfindung besteht in einer Doppel-Nutringdichtung, bei der zwei Paar Dichtlippen, die unter mechanischer Spannung stehen, für eine Abgrenzung der verschiedenen Volumina sorgen. Hierzu sind zwei spiegelbildlich zueinander angeordnete Nutringdichtungen durch einen sich verjüngenden Steg miteinander verbunden, in dem sich eine Nut zur Aufnahme und Fixierung des Schwingkreises befindet. Weiterhin befinden sich in diesem Steg zum Zentrum der Dichtung ausgerichtete Verbindungskanäle, so daß zwischen den vier Dichtkanten und dem Innen- und Außenrohr ein abgeschlossenes und zusammenhängendes Volumen, nämlich die überwachbare Flutungskammer, entsteht.

Eine weitere Doppeldichtung zur Durchführung der Erfindung besteht in einer Doppel-Verbindungsmuffe, die die Aufgabe hat, zwei im Durchmesser gleich starke Rohrenden dicht miteinander zu verbinden. Um der Dichtung genügend Stabilität zu verleihen und um sie vor äußeren Einflüssen zu schützen, ist sie in eine zylindrische Manschette eingelegt, die Nuten aufweist, um die Dichtung zu fixieren. Jeweils zwischen zwei Dichtlippen eines jeden Paares ist eine umlaufende Nut angeordnet, die als Sammelbecken für ex- oder infiltrierte Flüssigkeit dient und die durch Kanäle miteinander verbunden sind, so daß wieder ein zusammenhängendes Volumen entsteht. In eine Nut ist ein Schwingkreis eingelegt.

Eine weitere mögliche Ausführungsform der Muffenverbindung besteht darin, auf die Verbindungskanäle zwischen den beiden Flutungsräumen zu verzichten und jeden der beiden Flutungskammern mit einem eigenen Schwingkreis zu überwachen, die elektrisch auch parallel geschaltet sein können.

Die Kopplung zwischen der Meßelektronik und dem Schwingkreis erfolgt induktiv über eine Sende- und eine Empfangsspule oder über eine kombinierte Sende- und Empfangsspule. Die Erregerspule kann ein- oder mehrlagig und mit oder ohne ferromagnetischen Kern gestaltet sein. Sie erzeugt ein magnetisches Wechselfeld, das den als Sensor wirkenden Schwingkreis, der sich im Wirkungsbereich einer oder mehrerer Dichtungen, vorzugsweise in oder neben einer Dichtung, befindet, zum Schwingen anregt. Der so angeregte Schwingkreis strahlt einen Teil der von ihm absorbierten Energie wieder in den Raum zurück, die ihr Maximum erreicht, wenn der Schwingkreis in seiner Resonanzfrequenz angeregt wird. Die Empfangsspule detektiert diese Schwingung und leitet sie an die Meßelektronik zur Aufbereitung weiter.

Die Erregerspule kann sich komplett außerhalb des Schwingkreises befinden, oder diesen umschließen oder von dieser umschlossen sein.

Bei der direkten, galvanischen Kopplung des Schwingkreises mit einer Meßelektronik entfällt die Sende- und Empfangsspule.

Mehrere Meßeinheiten lassen sich vorzugsweise über ein Koaxialkabel, das die einzelnen Einheiten mit elektrischer Energie versorgt und das gleichzeitig die Aufgabe der Datenübermittlung übernimmt, hintereinanderschalten.
Gespeist wird dieses Kabel durch die Auswerteelektronik, die beispielsweise in einem Kanalschacht, von außen zugänglich, untergebracht ist. In dieser Auswerteelektronik laufen auch die Daten der einzelnen Meßeinheiten auf. Durch die Aneinanderreihung mehrerer Meßeinheiten ergibt sich eine Meßkette, die ein gesamtes Rohrleitungssystem permanent auf Schädigung der Dichtungen überwachen kann und die eine Lokalisierung einer oder mehrerer schadhaften Dichtungen zuläßt.

Die Auswerteelektronik hat weiterhin die Aufgabe, im Falle einer Leckage diese an ein übergeordnetes Überwachungssystem, beispielsweise in einer Meßwarte, weiterzuleiten. Dies kann direkt über eine Kabelverbindung oder durch Zwischenschalten von Modems über ein Fernsprechnetz erfolgen.

### Gewerbliche Anwendung:

Durch die vorliegende Erfindung läßt sich präventiver Umweltschutz realisieren. Als Anwender kommen vor allem die Betreiber von Rohrleitungssystemen in Betracht, die umweltschädliche Flüssigkeiten transportieren. Hierzu zählen belastete, chemische Abwässer oder Kanalisationen, die durch Wasserschutzgebiete führen oder Flüssigkeitskreisläufe in Kernkraftwerken. Der Anwender hat den Vorteil, daß eine permanente Überwachung der Dichtungen stattfindet. Im Schadensfall erspart ihm die Installation eines Überwachungssystems die hohen Sanierungskosten für verseuchtes Grundwasser oder Erdreich.

Eine weitere Anwendung stellen dynamische Dichtungen im Maschinenbau dar, bei denen der Austritt von Schmiermitteln an rotierenden Wellen detektiert werden soll.

### Vorteile der Erfindung:

Die Erfindung besitzt den hervorstechenden Vorteil, daß mit ihr die Dichtelemente einer oder mehrerer Dichtungen in ihrem normalen Betriebszustand und jederzeit auf ihre Funktionstüchtigkeit elektronisch überprüft werden können. Das Ergebnis dieser Überwachung kann EDV-gerecht an eine Meßwarte übermittelt werden. Die Ortsbestimmung einer oder mehrerer schadhaften Dichtungen ist möglich. Ein schadhaftes Dichtelement kann u.U. detektiert werden, noch bevor die gesamte Dichtung funktionsuntüchtig wird.

### Bevorzugtes Ausführungsbeispiel der Erfindung:

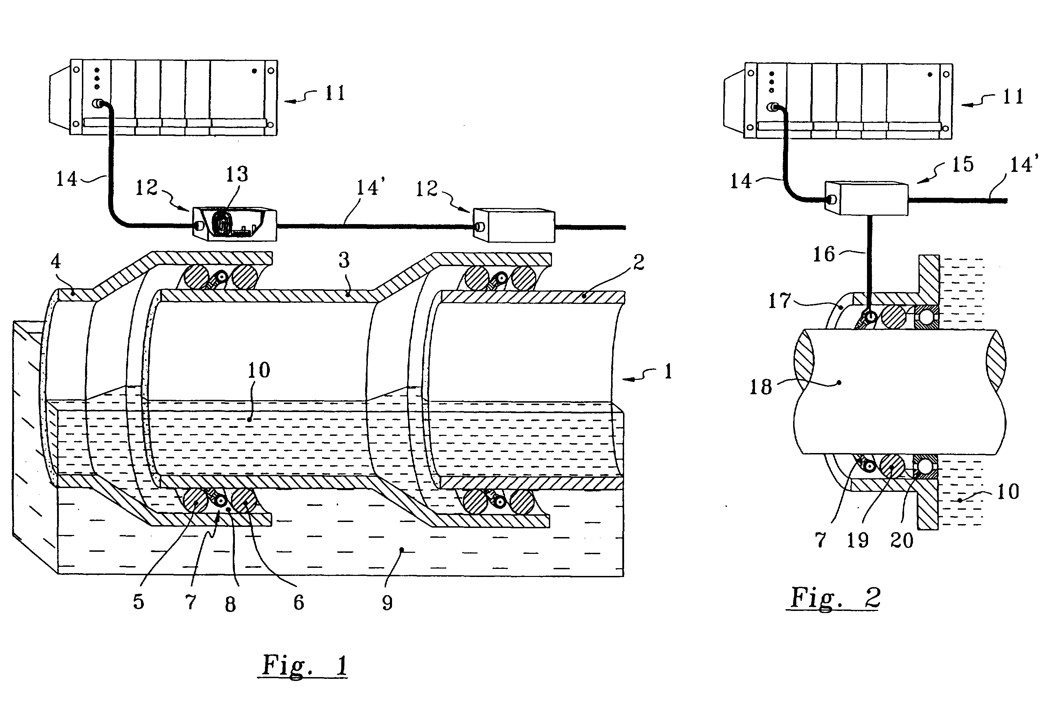

Anhand der **Fig. 1**, einer unterirdischen Abwasserleitung 1, sollen die Vorteile verdeutlicht werden.

Beispielsweise kommt es durch Wurzeleinwuchs zur Leckage eines äußeren Dichtringes 6. Falls der Grundwasserspiegel 9 über dem Ort der Leckage liegt, füllt sich deren Flutungskammer 8 mit Grundwasser 9 und benetzt den integrierten Schwingkreis 7. Die Meßeinrichtung 12 detektiert diese schadhafte Dichtung 6, noch bevor ein Eindringen von Flüssigkeit 9 (Infiltration) in das Rohrleitungssystem 1 stattfindet.

Ein weiterer, möglicher Störfall ist, daß ein innerer Dichtring 5 durch chemisch aggressive Substanzen, die sich in der zu transportierenden Flüssigkeit 10 befinden, so weit angegriffen wird, daß er spröde oder rissig und somit undicht wird. Dadurch dringt die Flüssigkeit 10 in die Flutungskammer 8 der Dichtung und in das Innere des Schwingkreises 7 ein. Falls der äußere Dichtring 6 noch funktionstüchtig ist, detektiert die Meßeinrichtung 12 diese schadhafte Dichtung 5, noch bevor ein Austritt von Flüssigkeit 10 aus dem Rohrleitungssystem 1 (Exfiltration) stattfindet.

Die entsprechende Meßeinheit 12 leitet die Leckagemeldung, ergänzt mit einer individuellen Codenummer, an eine Auswerteelektronik 11 bzw. an eine Meßwarte weiter, so daß der Schaden synchron zu seinem Auftreten gemeldet wird.

Mit Hilfe eines Lageplans der Meßeinheiten 12 und der übermittelten Codenummer, kann eine genaue Ortsbestimmung der Leckage vorgenommen werden.

Die Betreiber der Anlage können Maßnahmen ergreifen, beispielsweise den betroffenen Leitungsabschnitt absperren, leerpumpen und sanieren, noch bevor Umweltschäden entstehen oder sich ausweiten können. Dies ist besonders bei Transport hochbelasteter Stoffe oder im Bereich von Wasserschutzgebieten ein wesentlicher Vorteil, da die Kosten für eine eventuelle Beseitigung der Umweltschäden ein Vielfaches der Kosten für die Installation und den Betrieb einer solchen Überwachungseinrichtung betragen können.

In den Zeichnungen zeigen:
- **Figur 1**: perspektivische Ansicht einer Auswerteelektronik, verknüpft mit einer statischen Anwendung der prinzipiellen Dichtung-Schwingkreis-Kombination
- **Figur 2**: schematische Darstellung einer drehbar gelagerten Welle in einer dynamischen Anwendung der prinzipiellen Dichtung-Schwingkreis-Kombination mit einer Auswerteelektronik
- **Figur 3**: perspektivische Ansicht eines Schwingkreises, bestehend aus einem Koaxialkabelring mit einer Windung
- **Figur 4**: perspektivische Ansicht eines als Kondensator wirkenden Koaxialkabelringes mit einer Spule zu einem Schwingkreis verschaltet
- **Figur 5**: Teilschnitt durch einen Schwingkreis aus einer doppellagigen Spule
- **Figur 6**: Aufbau des Koaxialkabels gemäß der Figuren 3 und 4
- **Figur 7**: räumliche, exzentrische Anordnung von Spule und Schwingkreis
- **Figur 8**: räumliche, punktsymetrische Anordnung von äußerer Spule und Schwingkreis
- **Figur 9**: räumliche, punktsymetrische Anordnung von innerer Spule und äußerem Schwingkreis
- **Figur 10**: Schnitt durch eine O-Ringdichtung mit einem separaten Schwingkreis
- **Figur 11**: Schnitt durch eine O-Ringdichtung mit einem gekoppelten Schwingkreis
- **Figur 12**: Schnitt durch zwei O-Ringdichtungen mit separatem Schwingkreis
- **Figur 13**: Schnitt durch eine Doppel-O-Ringdichtung mit integriertem Schwingkreis
- **Figur 14**: Schnitt durch eine Doppel-Radialwellendichtung mit integriertem Schwingkreis
- **Figur 15**: Schnitt durch eine perforierte Doppel-Radialwellendichtung mit integriertem Schwingkreis
- **Figur 16**: Schnitt durch eine Doppel-Lippendichtung mit integriertem Schwingkreis
- **Figur 17**: Schnitt durch eine perforierte Doppel-Lippendichtung mit integriertem Schwingkreis
- **Figur 18**: Schnitt durch eine Doppel-Nutringdichtung mit integriertem Schwingkreis
- **Figur 19**: Schnitt durch eine Flanschverbindung und eine Doppel-O-Ringdichtung mit integriertem Schwingkreis
- **Figur 20**: Schnitt durch eine Verbindungsmuffe und Muffendichtung mit integriertem Schwingkreis
- **Figur 21**: Schnitt durch eine Verbindungsmuffe mit Muffendichtung mit Verbindungskanälen und integriertem Schwingkreis
- **Figur 22**: Teilausschnitt durch eine Kanalisation mit einer Meßeinrichtung zur permanenten Überwachung der Dichtungen
- **Figur 23**: Teilausschnitt durch eine Kanalisation mit einem Kanalüberwachungsfahrzeug mit einer aufgesetzten Meßeinheit zur zyklischen Überwachung der Dichtungen

**Figur 1** zeigt eine perspektivische Ansicht einer elektronischen Meßeinrichtung, verknüpft mit einer statischen Anwendung der Dichtung-Schwingkreis-Kombination im prinzipiellen, schematischen Aufbau einer Meßkette, mit allen erfindungswesentlichen Elementen. Ein unterirdisches Rohrsystem 1, das von Grundwasser 9 umgeben ist, besteht aus Rohren 2, 3 und 4 und besitzt jeweils im Muffenbereich zweier Rohre zur Abgrenzung des inneren, flüssigen Mediums 10 zur Außenwelt, zwei parallel nebeneinander angeordnete Dichtungen 5, 6, zwischen denen ein elektrischer Schwingkreis 7 integriert ist, wie er anschließend näher erläutert ist.

Zur Vereinfachung sind stellvertretend für andere Ausführungsformen alle Dichtungen als O-Ringdichtungen und der Schwingkreis 7 als zu einem Ring ausgebildetes Koaxialkabel dargestellt.

Über den Verbindungsmuffen sind miteinander über eine Daten- und Versorgungsleitung 14 verkabelte Meßeinheiten 12 angebracht, die jeweils einem der Schwingkreise 7 zugeordnet sind und die an eine Auswerteelektronik 11 angeschlossen sind.

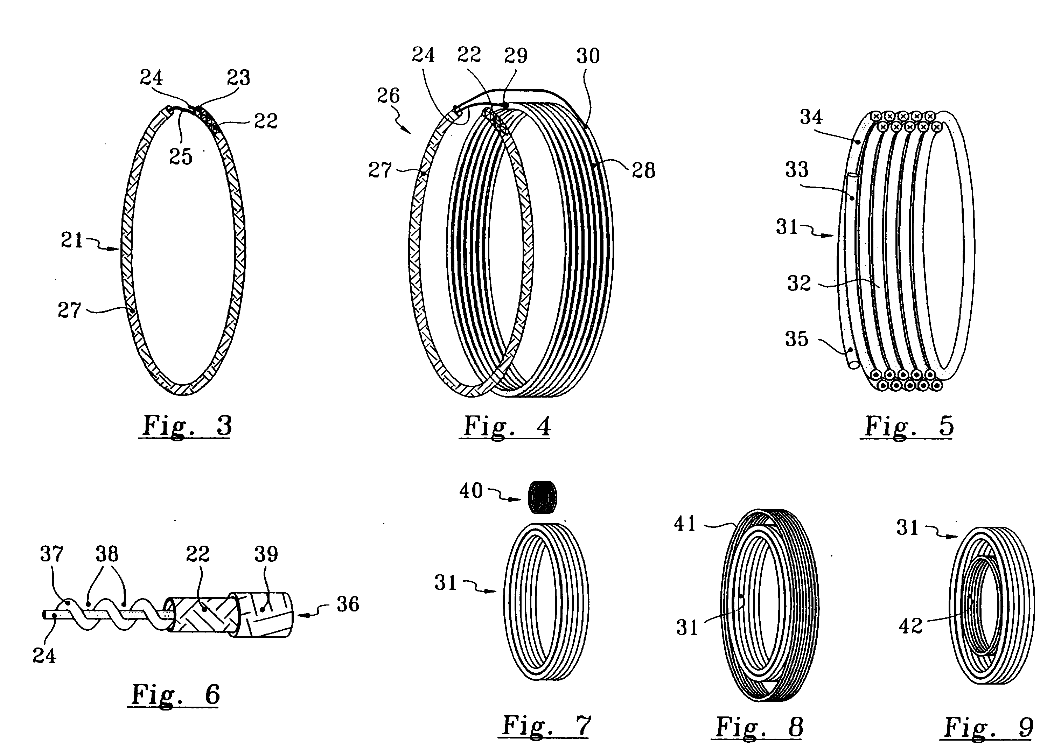

**Figur 2** zeigt eine schematische Darstellung einer drehbar gelagerten Welle 18, die aus einem Gehäuse 17 herausragt und die in ein flüssiges Medium 10 eintaucht, mit Überwachung ihrer Dichtung 19 in einer dynamischen Anwendung der prinzipiellen Dichtung-Schwingkreis-Kombination. Zwischen einem Schwingkreis 7 und dem flüssigen Schmiermittel 10 des Lagers 20, befindet sich beispielsweise eine O-Ringdichtung 19. Zwischen der Auswerteelektronik 11 und dem Schwingkreis 7 im Bereich der Dichtung 19 ist schematisch eine Meßeinheit 15 dargestellt, die eine Verkettung mehrerer derartiger Meßstellen gestattet. Über eine galvanische Ankopplung 16 ist der Schwingkreis 7 mit der Meßeinheit 15 verbunden, die über eine Daten- und Versorgungsleitung 14 mit der Auswerteelektronik 11 in Verbindung steht.

Die Figuren 3 bis 5 zeigen verschiedene Ausgestaltungen des Schwingkreises.

Der Schwingkreis 21 der **Figur 3** besteht aus einem Koaxialkabelring 27 mit einem Außenleiter 22 und einem Innenleiter 24, wobei der Außenleiter 22 als Spule mit einer Windung wirkt und der Innenleiter 24 mit dem Außenleiter 22 eine Kapazität bilden. Der Wicklungsanfang 25 des Innenleiters 24 ist mit dem Wicklungsende 23 des Außenleiters 22 elektrisch verbunden, wobei sich die elektrischen Parameter des so gebildeten Schwingkreises bei Eintritt von Flüssigkeit in das Innere des Koaxialkabels 21 ändern.

**Figur 4** zeigt eine perspektivische Ansicht eines als Kondensator wirkenden Koaxialkabelringes 27, der mit einer Spule 28 zu einem Parallelschwingkreis 26 verschaltet ist. Die kapazitive Wirkung des Koaxialkabels 36 beruht auf der räumlichen Nähe von Innenleiter 24 und Außenleiter 22. Dabei ist der Innenleiter 24 mit dem Spulenanfang 29 und der Außenleiter 22 mit dem Spulenende 30 elektrisch verbunden. Auch hier ändern sich die elektrischen Parameter des Schwingkreises 26 beim Eintritt von Flüssigkeit in das Innere des Koaxialkabels 36.

**Figur 5** zeigt einen Teilschnitt durch einen Schwingkreis 31, der aus einer doppellagigen Spule, die aus einer elektrisch isolierten Ader, mit der äußeren Windungslage 34 und einer inneren Windungslage 32 gebildet wird. Durch die räumliche Nähe zwischen dem offenen Wicklungsanfang 33 und dem offenen Wicklungsende 35 entstehen relativ hohe parasitäre Kapazitäten, die sich beim Eintritt von Flüssigkeit in den normalerweise mit Luft gefüllten Raum zwischen die beiden Wicklungslagen 32 mit 34 entsprechend der Dielektrizitätskonstanten der Flüssigkeit ändern.

**Figur 6** zeigt den inneren Aufbau des Koaxialkabels 36 gemäß den **Figuren 3** und **4**, wobei sowohl das Schutzgewebe 39 als auch das äußere Kupfergeflecht 22, das den Außenleiter darstellt, für Flüssigkeiten durchlässig ist. Dieses Kabel 36 erhöht seine Kapazität zwischen dem mit Schutzlack isolierten Innenleiter 24 und dem Außenleiter 22 beim Eintritt von Flüssigkeit aufgrund der dielektrischen Eigenschaften der Flüssigkeit. Eine als Isolator und Abstandhalter wirkende Kunststoffwendel 37 um den Innenleiter 24 sorgt für die mechanische Stabilität der Anordnung und bildet Hohlräume 38 im Inneren des Kabels 36 aus, in die eine Flüssigkeit eindringen kann.

In den **Figuren 7** bis **9**, sind die elektromagnetischen Kopplungen zwischen einer Sende- oder Erregerspule und dem Schwingkreis 31 und deren räumliche Anordnung dargestellt. Dabei kann die Sendespule auch die Funktion einer Empfangsspule übernehmen.

In **Figur 7** befindet sich die Sendespule 40 außerhalb des Schwingkreises 31, wobei die Längsachsen der Sendespule 40 und des Schwingkreises 31 parallel angeordnet sind. Der Schwingkreis 31 kann beispielsweise eine doppellagige Spule 31 gemäß der **Figur 5** sein.

In **Figur 8** ist die Sendespule 41 konzentrisch außen um den Schwingkreis 31 angeordnet. Hier fallen die Längsachsen der Sendespule 41 und des Schwingkreises 31 zusammen oder sind parallel zueinander.

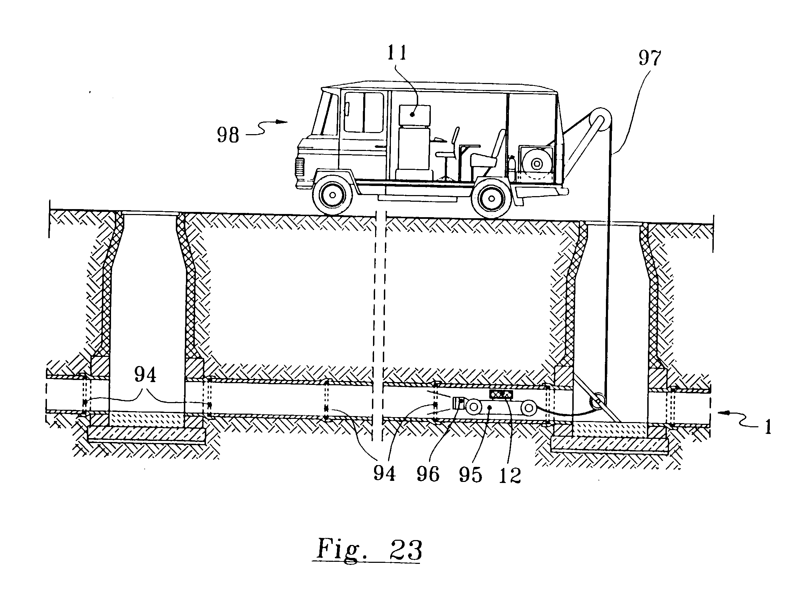

In **Figur 9** ist die umgekehrte Anordnung von **Figur 8**, von Sendespule 42 und Schwingkreis 31 gezeigt, indem sich hier die Erregerspule 42 konzentrisch innerhalb des Schwingkreises 31 befindet. Ein möglicher Anwendungsfall dieser Anordnung ist in **Figur 23** beschrieben.

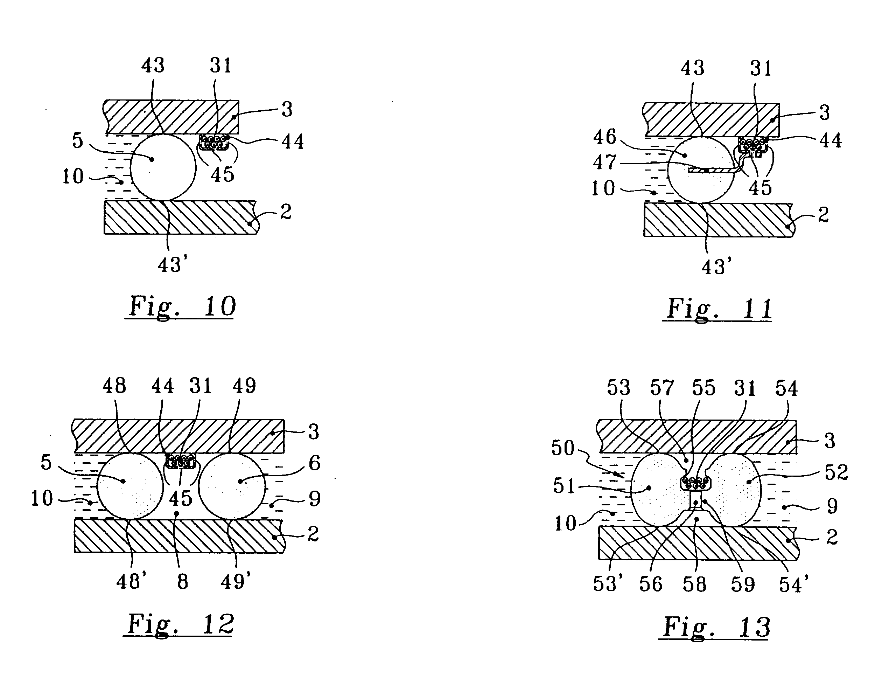

Die **Figuren 10** bis **13** zeigen beispielhaft die Anordnungen einer Dichtung bzw. von Dichtungen und einem Schwingkreis. Zur Veranschaulichung ist, stellvertretend auch für andere Dichtungstypen, die O-Ringdichtung 5 der **Figur 1** und für den Schwingkreis die doppellagige Spule 31 der **Figur 5** gewählt.

**Figur 10** zeigt die Kombination der O-Ringdichtung 5 mit einem separaten, parallel angeordneten Schwingkreis 31, der zur mechanischen Stabilisierung und Fixierung in eine Schwingkreishalterung 44 eingelegt ist, die peripher umlaufend ist und beispielsweise im Querschnitt eine U-Form besitzt und an der Wandung des Rohres 3 befestigt ist. Die Schwingkreishalterung 44 verfügt an ihren Begrenzungsflächen über Durchgangsbohrungen 45, so daß Flüssigkeiten in ihr Inneres eindringen können. Bei einer schadhaften Dichtung 5 passiert die Flüssigkeit 10 eine oder beide Dichtflächen 43, 43' der Dichtung 5 und trifft entweder direkt auf die Schwingkreishalterung 44 und somit auch auf den Schwingkreis 31, oder sie sammelt sich am unteren Fußpunkt der Dichtung 5 und gelangt erst dann in Kontakt mit dem Schwingkreis 31.

**Figur 11** zeigt die prinzipielle Verknüpfung einer O-Ringdichtung 46 mit einer Trägerschiene 47 und einer Schwingkreishalterung 44, in die ein Schwingkreis 31 integriert ist. Sowohl die Trägerschiene 47 als auch die Schwingkreishalterung 44 weisen Durchgangslöcher 45 auf, um eine Befeuchtung des Schwingkreises 31 zu erleichtern. Ansonsten gelten dieselben Aussagen wie für **Figur 10**.

**Figur 12** zeigt zwei O-Ringdichtungen 5, 6 mit separatem Schwingkreis 31. Diese Ausführung entspricht im Grunde der in **Figur 10**, ist aber durch eine zweite O-Ringdichtung ergänzt. Dadurch ergibt sich zwischen den beiden Dichtungen 5, 6 eine Flutungskammer 8, in die der Schwingkreisträger 44 mit Schwingkreis 31 eingebracht ist.

Die Flutungskammer 8 stellt eine vom Schwingkreis 31 überwachte, im Normalfall trockene Zone dar, die sich bei der Leckage einer der vier Dichtelemente 48, 48', 49 49' mit einer Flüssigkeit 10, 9 füllt.
Sollte nur eine Dichtung defekt sein, kommt es zu einer Leckagemeldung, noch bevor die Gesamtanordnung undicht wird. Durch dieses redundante System ergibt sich eine erhöhte Sicherheit für auslaufende oder eindringende Flüssigkeiten.

In **Figur 13** ist die Verschmelzung der Einzelkomponenten von **Figur 12** dargestellt und zeigt einen Schnitt durch eine Doppel-O-Ringdichtung 50 mit doppellagiger Spule 31 als Schwingkreis, so daß dieser zu einem integralen Bestandteil der Dichtung 50 wird.

Die Doppel-O-Ringdichtung 50 besteht aus zwei parallel zueinander angeordneten, im Durchmesser gleichen Dichtringen 51, 52, die durch einen verjüngten Steg 59 miteinander verbunden sind. In diesen Steg 59 ist eine Einlegenut 55 eingearbeitet, die zur Aufnahme des Schwingkreises 31 dient. Weiterhin befinden sich in diesem Steg 59 zum Zentrum ausgerichtete Verbindungskanäle 56, so daß zwischen den beiden Dichtringen 51, 52 und den Mantelflächen des Innenrohres 2 und des Außenrohres 3 ein abgeschlossenes und zusammenhängendes Volumen, nämlich die Flutungskammer, entsteht. Diese setzt sich also aus den Einzelkomponenten innerer und äußerer Flutungskammer 58, 57 sowie aus den Verbindungskanälen 56 und der Einlegenut 55 zusammen. In der Funktion entspricht diese Anordnung der in **Figur 12**.

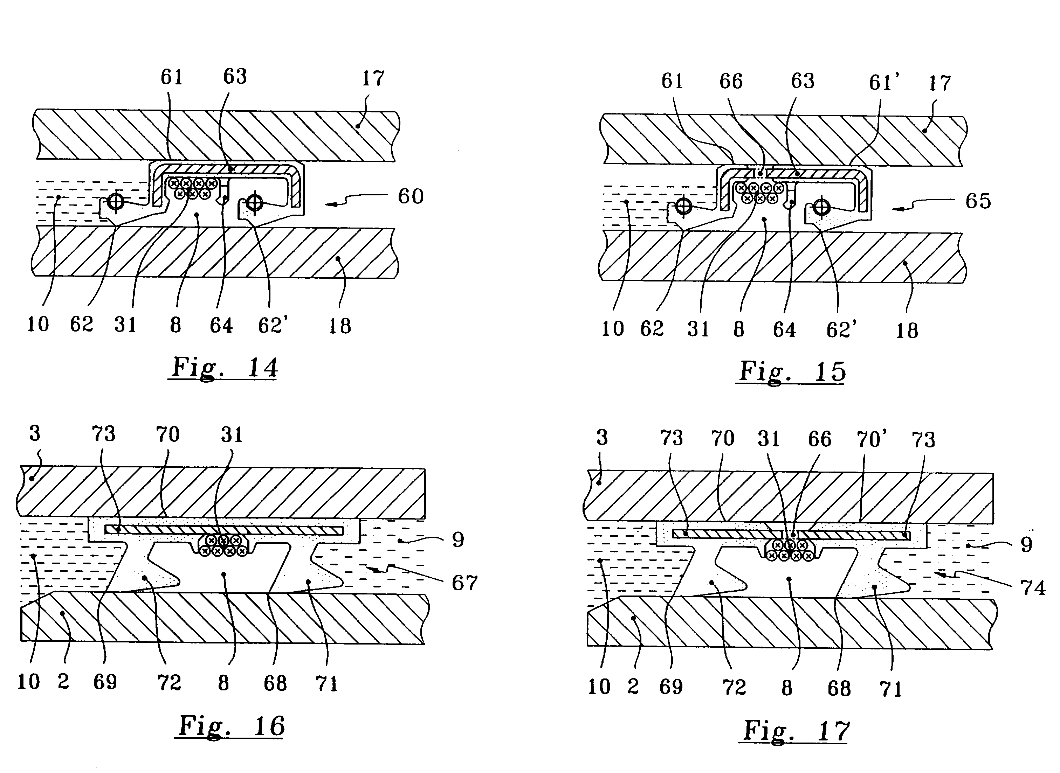

In den **Figuren 14** und **15** sind zwei Ausführungen einer Doppel-Radialwellendichtung gezeigt.

**Figur 14** zeigt einen schematischen Schnitt durch eine Doppel-Radialwellendichtung 60 mit integriertem Schwingkreis 31, die sich zwischen einer Welle 18 und einem Gehäuse 17 zur Abdichtung gegen ein inneres, flüssiges Medium 10 befindet. Die Dichtung 60 stellt die Kombination zweier Radialwellendichtungen mit Dichtkanten 62, 62' und der feststehenden Dichtfläche 61 und mit einer steg- oder schienenförmigen Verbindung 63, zu einer Einheit dar, so daß der Schwingkreis 31 mit seiner Arretierung 64 zu einem integralen Bestandteil der Dichtung 60 wird.

Die Dichtung 65 der **Figur 15** unterscheidet sich von der Dichtung 60 in **Figur 14** dadurch, daß die Schiene 63 durch eine Perforation 66 die feststehende Dichtfläche in zwei Hälften 61, 61' unterteilt, wodurch sich insgesamt vier Dichtelemente ergeben, die mit den Mantelflächen der Welle 18 und des Gehäuses 17 eine abgeschlossene Flutungskammer 8 begrenzen.
Der Vorteil dieser Anordnung besteht darin, daß mit der Dichtung 65 auch Risse oder Undichtigkeiten des Gehäuses 17 erfaßt werden können.

Die **Figur 16** zeigt einen schematischen Schnitt durch eine Doppel-Lippendichtung 67 mit integriertem Schwingkreis 31 zwischen einem Außenrohr 3 und einem Innenrohr 2. Die Doppel-Lippendichtung 67 ist im Prinzip die Kombination zweier ringförmiger mit Dichtkanten 68, 69 versehener Lippendichtungen 71, 72, die mit einer Schiene 73 als Armierung zu einer Einheit verbunden sind. Die Doppel-Lippendichtung 67 begrenzt mit der Mantelfläche des Rohres 2 eine Flutungskammer 8.

Die Dichtung 74 der **Figur 17** unterscheidet sich von der Dichtung 67 in der **Figur 16** dadurch, daß die Schiene 73 durch eine Perforation 66 die feststehende Dichtfläche in zwei Hälften 70, 70' unterteilt, wodurch sich insgesamt vier Dichtelemente ergeben, die durch die Mantelflächen der Rohre 2, 3 eine abgeschlossene Flutungskammer 8 begrenzen.
Der Vorteil dieser Anordnung besteht darin, daß mit der Dichtung 74 auch Risse oder Undichtigkeiten des äußeren Rohres 3 erfaßt werden können.

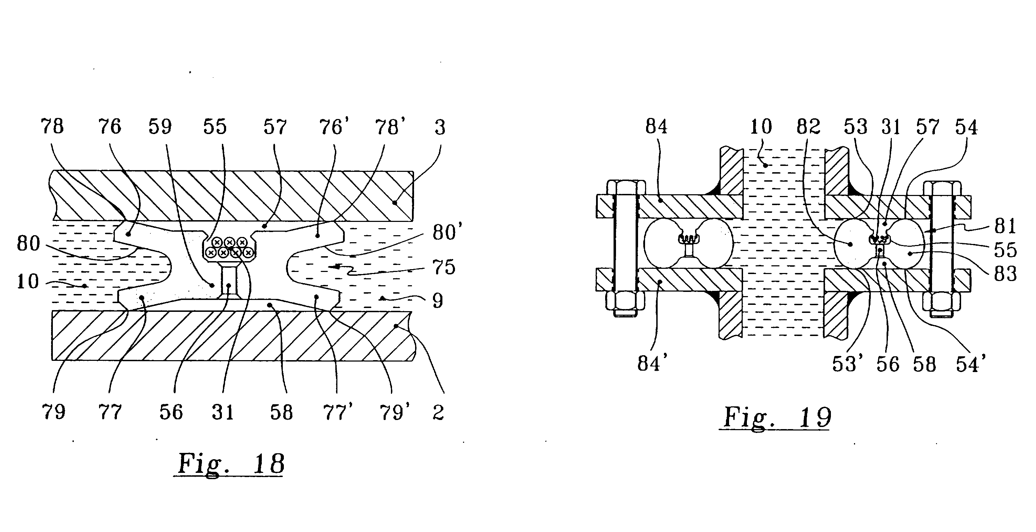

In der **Figur 18** ist schematisch die Kombination zweier ringförmiger Nutringdichtungen zu einer Einheit in Form einer Doppel-Nutringdichtung 75 dargestellt, so daß der Schwingkreis 31 selbst integraler Bestandteil der Dichtung 75 ist.
Die Dichtung 75 besitzt einen im Prinzip X-förmigen Querschnitt, mit vier parallel zueinander angeordnete Dichtlippen 76, 76' und 77, 77', welche in den vier Dichtkanten 78, 78', 79, 79' enden und die durch einen sich verjüngenden Steg 59 miteinander verbunden sind, in welchem sich eine Nut 55 zur Aufnahme und Fixierung des Schwingkreises 31 befindet. Zwischen den paarweise angeordneten Dichtlippen 76, 77 und 76', 77' befindet sich je eine Nut 80, 80'. Weiterhin befinden sich in dem Steg 59 zum Zentrum der Dichtung 75 ausgerichtete Verbindungskanäle 56, so daß zwischen den vier Dichtkanten 78, 78', 79, 79' und den Mantelflächen des Innenrohres 2 und des Außenrohres 3 eine überwachbare Flutungskammer entsteht. Diese setzt sich im einzelnen aus der oberen Flutungskammer 57, der unteren Flutungskammer 58, aus der Einlegenut 55 und aus den Verbindungskanälen 56 zusammen.
Der Schwingkreis 31 kann beispielsweise eine zweilagige Spule sein.

In der **Figur 19** ist eine Doppel-Flanschdichtung 81 dargestellt, die sich von der Doppel-O-Ringdichtung 50 aus der **Figur 13** dadurch unterscheidet, daß der innere Dichtring 82 einen kleineren Durchmesser als der äußere Dichtring 83 aufweist. Ansonsten gilt für die Doppel-Flanschdichtung 81 die Beschreibung der Doppel-O-Ringdichtung 50.

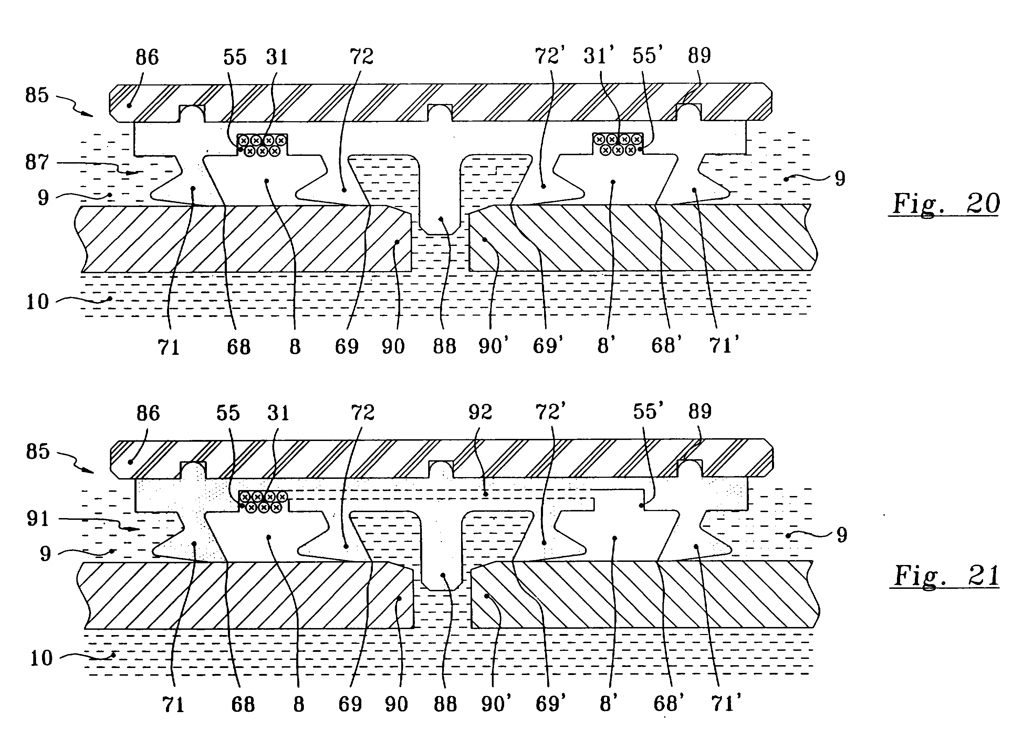

Die **Figur 20** zeigt einen Schnitt durch eine Verbindungsmuffe 85, mit den darin integrierten Schwingkreisen 31 und 31', in der eine der **Figur 16** ähnlichen umlaufenden Ringdichtung 67 gezeigt ist, die hier als zweifache Doppel-Lippendichtung 87 ausgeführt ist, mit paarweise angeordneten Dichtlippen 71, 72 bzw. 71', 72', wobei das eine Paar Dichtlippen 71, 72 gegenüber der Rohrwandung des Rohres 90 und das andere Paar Dichtlippen 71', 72' gegenüber der Rohrwandung des benachbarten Rohres 90' jeweils mittels der entsprechenden Dichtkanten 68, 69 bzw. 68', 69' abdichtet; nach außen ist die Dichtung 87 in einer Manschette 86 mit Arretierungsnuten 89 gefaßt. Der zentral umlaufende, ringförmige Anschlag 88 begrenzt die Einschubtiefe der beiden Rohre 90, 90'. Jedes Paar Dichtlippen bildet zwischen sich und der entsprechenden Rohrwandung einen Flutungsraum 8, 8' aus, in dem sich eine Einlegenut 55, 55' mit den entsprechenden Schwingkreisen 31, 31' befindet.

Die **Figur 21** zeigt einen Schnitt durch eine Verbindungsmuffe gemäß **Figur 20**, mit dem Unterschied, daß die beiden Flutungskammern 8, 8' mittels der Verbindungskanäle 92 miteinander verbunden sind, so daß sich eine angeschlossene Flutungskammer ergibt, die sich mit nur einem Schwingkreis 31 überwachen läßt.

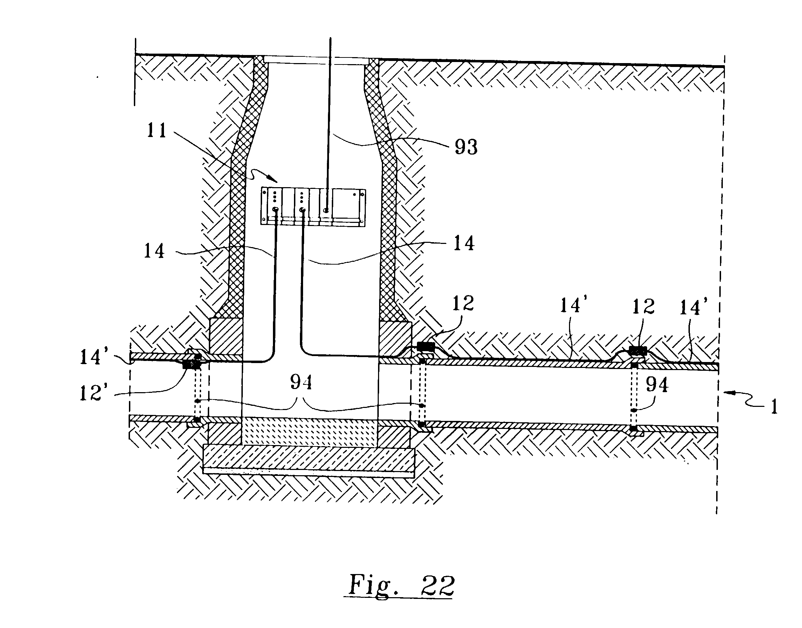

**Figur 22** zeigt einen Teilausschnitt einer Meßeinrichtung zur permanenten Überwachung eines flüssigkeitsführenden Rohrsystems 1. Dargestellt sind zwei Rohrstränge, die in einen Schacht münden. Die ineinander gesteckten Rohre werden durch eine schematisch dargestellte ringförmige Dichtung 94 mit eingearbeitetem Schwingkreis zur Außenwelt hin abgegrenzt.
Im rechten Strang sind die Meßeinheiten 12 im Erdreich über jeder Verbindungsmuffe angeordnet, während sich die Meßeinheiten 12' im linken Strang innerhalb der Rohre in unmittelbarer Nähe der Dichtung 94 befinden. Die einzelnen Meßeinheiten 12, 12' sind untereinander und zur Auswerteelektronik 11 hin mit den Versorgungs- und Datenleitungen 14, 14' verkabelt. Die Auswerteelektronik 11, die im Schacht angeordnet ist, ist mit einem Kabel 93 zur Datenfernübertragung zu einer Meßwarte versehen.
Diese Anordnung gestattet eine permanente Überwachung von Rohrleitungssystemen 1.

**Figur 23** zeigt einen Teilausschnitt durch eine Kanalisation zur zyklischen oder sporadischen Überwachung eines flüssigkeitsführenden Rohrsystems 1.
Die ineinander gesteckten Rohre der Kanalisation werden durch eine schematisch dargestellte ringförmige Dichtung 94 mit eingearbeiteten Schwingkreis zur Außenwelt hin abgegrenzt.
Weiterhin ist eine mobile Meßeinheit 12 gezeigt, die auf ein Kanalüberwachungsfahr95 mit einem Kamerafernaugen 96 montiert ist. Solche Kanalüberwachungsfahrzeuge 95 sind Stand der Technik und haben sich bei der optischen Inspektion von Rohrsystemen 1 bewährt.
Bei der Fahrt durch das Rohrsystem passiert die Meßeinheit 12 den Wirkungsbereich der einzelnen Schwingkreise 94 und leitet die Meßergebnisse über ein Datenkabel 97 an den Meßwagen 98 in die Auswerteelektronik 11 weiter, wo sie protokolliert und ausgewertet werden.

Die in der Zeichnung gezeigten und vorstehend beschriebenen Kombinationen von Schwingkreis und Dichtungstyp sind beispielhaft und begrenzen nicht den Gegenstand der Erfindung.

### Bezugszeichenliste:

### Elektronische Meßeinrichtung zur Erfassung von Undichtigkeiten von Dichtungen für flüssige Medien

- 1: Rohrsystem od. Kanalisation
- 2: Rohr mit Muffe und Spitzende
- 3: Rohr mit Muffe und Spitzende
- 4: Rohr mit Muffe und Spitzende
- 5: Dichtung innere
- 6: Dichtung äußere
- 7: Schwingkreis
- 8 8': Flutungskammer
- 9: flüssiges Außenmedium
- 10: flüssiges Innenmedium
- 11: Auswerteelektronik
- 12 12': Meßeinheit induktive
- 13: Spule
- 14 14': Daten- und Versorgungsleitung
- 15: Meßeinheit galvanisch
- 16: Meßleitung
- 17: Gehäuse
- 18: Welle
- 19: Dichtung dynamische
- 20: Lagerung
- 21: Schwingkreis aus Koaxialkabelring
- 22: Koaxialkabel Außenleiter
- 23: Wicklungsende des Außenleiters
- 24: Koaxialkabel Innenleiter
- 25: Wicklungsanfang des Innenleiters
- 26: Schwingkreis aus Koaxialkabel und Spule
- 27: Koaxialkabelring oder -wendel
- 28: Spule
- 29: Spulenanfang
- 30: Spulenende
- 31 31': Schwingkreis aus zweilagiger Spule
- 32: Wicklungslage innere
- 33: Wicklungsanfang
- 34: Wicklungslage äußere
- 35: Wicklungsende
- 36: Koaxialkabel
- 37: Kunststoffwendel
- 38: Hohlraum
- 39: Schutzgewebe
- 40: Spule
- 41: Spule
- 42: Spule
- 43 43': Dichtflächen
- 44: Schwingkreishalterung
- 45: Durchgangsloch
- 46: Dichtung O-Ringdichtung
- 47: Halterung, Trägerschiene
- 48 48': Dichtflächen
- 49 49': Dichtflächen
- 50: Dichtung Doppel-O-Ringdichtung
- 51: Dichtring Innen
- 52: Dichtring Außen
- 53 53': Dichtflächen
- 54 54': Dichtflächen
- 55 55': Einlegenut
- 56: Verbindungskanal
- 57: Flutungskammer oben
- 58: Flutungskammer unten
- 59: Steg
- 60: Dichtung Doppel-Radialwellendichtung
- 61 61': Dichtfläche feststehend
- 62 62': Dichtkante
- 63: Schiene
- 64: Arretierung
- 65: Dichtung Doppel-Radialwellendichtung
- 66: Perforation
- 67: Dichtung Doppel-Lippendichtung
- 68 68': Dichtkante außen
- 69 69': Dichtkante innen
- 70 70': Dichtfläche feststehend
- 71 71': Dichtlippe außen
- 72 72': Dichtlippe innen
- 73: Schiene
- 74: Dichtung Doppel-Lippendichtung
- 75: Dichtung Doppel-Nutringdichtung
- 76 76': Dichtlippe oben
- 77 77': Dichtlippe unten
- 78 78': Dichtkante obere
- 79 79': Dichtkante untere
- 80 80': Nut
- 81: Dichtung Doppel-Flanschdichtung
- 82: Dichtring kleiner ⌀
- 83: Dichtring großer ⌀
- 84 84': Flansch
- 85: Verbindungsmuffe
- 86: Manschette
- 87: Dichtung Muffe, 2 Schwingkreise
- 88: Anschlag
- 89: Arretierungsnut
- 90 90': Rohrende
- 91: Dichtung Muffe, 1 Schwingkreis
- 92: Verbindungskanal
- 93: Kabel zur Datenfernübertragung
- 94: Dichtung mit integriertem Schwingkreis
- 95: Kanalüberwachungsfahrzeug
- 96: Kamerafernauge
- 97: Daten-, Versorgungs- und Steuerkabel
- 98: Meßwagen

## Patentansprüche

1. Elektronische Meßeinrichtung zur Erfassung von Undichtigkeiten von Dichtungen oder Anschlüssen an Flüssigkeiten führenden Leitungen, wobei die Dichtungen oder Anschlüsse Hohlräume aufweisen, in denen elektrische Sensoren angeordnet sind, die auf eindringende Flüssigkeit ansprechen und bei denen die außen liegenden Wandungen des Hohlraumes für elektromagnetische Wellen permeabel sind, gekennzeichnet durch die folgenden Merkmale:
a) der Sensor ist ein Parallelschwingkreis (7, 21, 26, 31, 31') dessen kapazitiver Anteil durch eindringende Flüssigkeit änderbar ist;
b) außerhalb des Hohlraumes befindet sich ein Sender der den Sensor in Resonanz versetzt;
c) außerhalb des Hohlraumes befindet sich weiterhin ein Empfänger, der eine Veränderung der resonanten Schwingungen erfaßt und in ein Signal umwandelt.

2. Meßeinrichtung nach Anspruch 1,
dadurch gekennzeichnet,
daß der elektrische Schwingkreis (21) aus einem als Ring oder Wendel (27) ausgebildeten Koaxialkabel (36) besteht, bei dem der elektrische Außenleiter (22) des Koaxialkabels (36) für die zu detektierende Flüssigkeit durchlässig ist und als Spule mit einer oder mehreren Windungen wirkt und der elektrisch isolierte Innenleiter (24) mit dem Außenleiter (22) eine Kapazität bildet, die der Spule parallel geschaltet ist.

3. Meßeinrichtung nach Anspruch 1,
dadurch gekennzeichnet,
daß der elektrische Schwingkreis (26) aus einem als Ring oder Wendel (27) ausgebildeten Koaxialkabel (36) und einer parallel geschalteten, ringförmigen, ein- oder mehrlagigen Spule (28) besteht, wobei das Koaxialkabel (36) durch den kapazitiven Belag zwischen Innenleiter (24) und Außenleiter (22) als Kondensator wirkt und der Außenleiter (22) für die zu detektierende Flüssigkeit durchlässig ist.

4. Meßeinrichtung nach Anspruch 1,
dadurch gekennzeichnet,
daß der elektrische Schwingkreis aus einer ein- oder mehrlagigen Spule (31) besteht, die eine miteinander kombinierte Kapazität und Induktivität darstellt.

5. Meßeinrichtung nach einem der vorherigen Ansprüche 1 bis 4 in Kombination mit einer Flüssigkeiten führenden Leitung,
dadurch gekennzeichnet,
daß der Hohlraum eine Dichtung, die mindestens zwei Dichtflächen (43, 43') oder zwei Dichtkanten oder eine Dichtfläche und eine Dichtkante besitzt, die mit einem separaten, mechanisch nicht direkt gekoppelten Parallelschwingkreis kombiniert ist.

6. Meßeinrichtung nach einem der vorherigen Ansprüche 1 bis 4 in Kombination mit einer Flüssigkeiten führenden Leitung,
dadurch gekennzeichnet,
daß die Dichtung, die mindestens zwei Dichtflächen (43, 43') oder zwei Dichtkanten oder eine Dichtfläche und eine Dichtkante besitzt, und mit einem integrierten, mechanisch direkt gekoppelten Parallelschwingkreis, zum Beispiel mit einer doppellagigen Spule (31), kombiniert ist.

7. Meßeinrichtung nach einem der vorherigen Ansprüche 1 bis 4 in Kombination mit einer Flüssigkeiten führenden Leitung,
dadurch gekennzeichnet,
daß zwei Dichtungen, die jeweils mindestens zwei Dichtflächen (48, 48', 49, 49') oder jeweils zwei Dichtkanten oder eine Dichtfläche und eine Dichtkante besitzen und mit den Mantelflächen der Rohre (2, 3) eine Flutungskammer (8) begrenzen, in die ein separater, mechanisch nicht direkt gekoppelter Parallelschwingkreis, eingebracht ist.

8. Meßeinrichtung nach einem der vorherigen Ansprüche 1 bis 4 in Kombination mit einer Flüssigkeiten führenden Leitung,
dadurch gekennzeichnet,
daß die Dichtung, mindestens drei Dichtelemente, wie Dichtflächen oder Dichtkanten besitzt und zwei durch einen Steg (59) miteinander verbunden, im Radius gleiche Dichtringe (51, 52) aufweist und die so angeordnet sind, daß eine Doppel-O-Ringdichtung (50) entsteht, die mit den Mantelflächen des Innenrohres (2) und des Außenrohres (3) zwei Flutungskammern (57, 58) begrenzt, die durch mehrere, radial umlaufende Kanäle (56) miteinander verbunden sind und daß sie eine umlaufende Nut (55) zur Aufnahme des Schwingkreises beinhaltet.

9. Meßeinrichtung nach Anspruch 1 in Kombination mit einer Flüssigkeiten führenden Leitung, dadurch gekennzeichnet,
daß der Hohlraum aus zwei Radialwellendichtungen gebildet ist, die mittels einer Schiene (63) zu einer Doppel-Radialwellendichtung (60) verbunden sind, die mit der Mantelfläche der Welle (18) eine Flutungskammer (8) begrenzen, in der sich eine Vorrichtung zur Aufnahme eines Schwingkreises befindet.

10. Meßeinrichtung in Kombination mit einer Flüssigkeiten führenden Leitung nach Anspruch 9,
dadurch gekennzeichnet,
daß die Schiene (63) eine Perforation (66) aufweist, so daß die Flutungskammer (8) durch die Dichtung (65), die Welle (18) und das Gehäuse (17) begrenzt wird.

11. Meßeinrichtung nach Anspruch 1 in Kombination mit einer Flüssigkeiten führenden Leitung,
dadurch gekennzeichnet,
daß die Dichtung zwei ringförmig umlaufende Dichtlippen (71, 72) aufweist, die so angeordnet sind, daß eine Doppel-Lippendichtung (67) entsteht, die mit den zugehörigen Dichtkanten (68, 69) und der Mantelfläche des Innenrohres (2) eine Flutungskammer (8) begrenzt, in der sich eine Vorrichtung zur Aufnahme eines Schwingkreises befindet.

12. Meßeinrichtung in Kombination mit einer Flüssigkeiten führenden Leitung nach Anspruch 11,
dadurch gekennzeichnet,
daß die Doppel-Lippendichtung (74) eine Schiene (73) mit der Perforation (66) aufweist, so daß die Flutungskammer (8) durch die Dichtung (74) und durch die Mantelfläche der Rohre (2) und (3) begrenzt wird.

13. Meßeinrichtung nach Anspruch 1 in Kombination mit einer Flüssigkeiten führenden Leitung,
dadurch gekennzeichnet,
daß der Hohlraum von einer Dichtung gebildet ist, die im Querschnitt ungefähr einem "X" entspricht, deren Dichtlippen (76, 76', 77, 77') durch einen Steg (59) miteinander verbunden und so angeordnet sind, daß eine Doppel-Nutringdichtung (75) entsteht, die mit den entsprechenden Dichtkanten (78, 78', 79, 79') und den Mantelflächen der Rohre (2, 3) zwei Flutungskammern (57, 58) begrenzt, die durch mehrere, radial umlaufende Kanäle (56) verbunden sind und daß sie eine umlaufende Nut (55) zur Aufnahme eines Schwingkreises beinhaltet.

14. Meßeinrichtung in Kombination mit einer Flüssigkeiten führenden Leitung nach Anspruch 8,
dadurch gekennzeichnet,
daß die Dichtung, mindestens drei Dichtelemente, wie Dichtflächen oder Dichtkanten besitzt und einen im Radius kleineren Dichtring (82) und einen im Radius größeren Dichtring (83) aufweist und die so angeordnet sind, daß eine Doppel-O-Ringdichtung (81) entsteht, die mit den Mantelflächen der Flansche (84, 84') zwei Flutungskammern (57, 58) begrenzt, die durch mehrere Kanäle (56) verbunden sind und daß sie eine umlaufende Nut (55) zur Aufnahme eines Schwingkreises beinhaltet.

15. Meßeinrichtung nach Anspruch 1 in Kombination mit Flüssigkeiten führenden Leitung,
dadurch gekennzeichnet,
daß die Dichtung (87) zwei Paare von parallel zueinander umlaufenden Dichtlippen (71, 71', 72, 72') mit den entsprechenden Dichtkanten (68, 68', 69, 69') ausbildet, die mit den Mantelflächen der Rohre (90) und (90') zwei Flutungskammern (8, 8') begrenzen, in der sich jeweils eine Nut (55, 55') zur Aufnahme eines Schwingkreises befindet.

16. Meßeinrichtung in Kombination mit einer Flüssigkeiten führenden Leitung nach Anspruch 15,
dadurch gekennzeichnet,
daß die Nuten (55, 55') derart durch Kanäle (92) miteinander verbunden sind, daß ein zusammenhängendes Volumen der Flutungskammern (8, 8') ausgebildet ist, welches mit nur einem Schwingkreis überwachbar ist.

17. Meßeinrichtung nach Anspruch 1 in Kombination mit einer Flüssigkeiten führenden Leitung,
dadurch gekennzeichnet,
daß der im Bereich der Dichtung bzw. Dichtungen, insbesondere in oder neben der bzw. den Dichtungen (5, 6), angebrachte Parallelschwingkreis (7) induktiv mit einer Spule (13) gekoppelt ist, die Bestandteil einer elektronischen Meßeinheit (12) ist, die insbesondere die Resonanzfrequenz des Schwingkreises (7) zu ermitteln imstande ist.

18. Meßeinrichtung in Kombination mit einer Flüssigkeiten führenden Leitung Anspruch 17,
dadurch gekennzeichnet,
daß die Spule (40) sich exzentrisch außerhalb des Schwingkreises (31) befindet, oder daß die Spule (41) den Schwingkreis (31) von außen umschließt, oder daß sich die Spule (42) vollständig innerhalb des Schwingkreises (31) befindet.

19. Meßeinrichtung nach Anspruch 1,
dadurch gekennzeichnet,
daß der im Bereich der Dichtung bzw. Dichtungen, insbesondere in oder neben der oder den Dichtungen (19), angebrachte Parallelschwingkreis (7) galvanisch über eine Meßleitung (16) mit einer elektronischen Meßeinheit (15) verschaltet ist, die insbesondere die Resonanzfrequenz des Schwingkreises (7) zu ermitteln imstande ist.

20. Meßeinrichtung mach Anspruch 1 in Kombination mit einer Flüssigkeiten führenden Leitung nach Anspruch 17 und 19,
dadurch gekennzeichnet,
daß mehrere Meßeinheiten (12, 15) über eine Daten- und Versorgungsleitung (14') zu einer Meßkette verschaltet sind, die die Ergebnisse ihrer Messungen über eine Daten- und Versorgungsleitung (14) an eine Auswerteelektronik (11) weiterleiten, die eine Bewertung des Meßergebnisses vornimmt und in geeigneter Form zur Anzeige bringt oder das Ergebnis an eine übergeordnete Stelle, wie Meßwarte, weiterleitet.

21. Meßeinrichtung nach Anspruch 1 in Kombination mit einer Flüssigkeiten führenden Leitung nach einem der Ansprüche 17 und 18,
dadurch gekennzeichnet,
daß die Meßeinrichtung (12) mobil, zur Überwachung der mit den Schwingkreisen kombinierten Dichtungen (94) auf einem fahrbaren Untersatz, zum Beispiel ein Kanalüberwachungsfahrzeug (95) montiert ist und über eine Daten- und Versorgungsleitung (97) mit der Auswerteelektronik (11) verbunden ist, die sich in einem Meßwagen (98) befindet.

22. Meßeinrichtung nach Anspruch 1 in Kombination mit einer Flüssigkeiten führende Leitung nach Anspruch 17 und 18,
dadurch gekennzeichnet,
daß die Meßeinrichtung sowie die Auswerteelektronik und eine geeignete Anzeigeeinrichtung zur Überwachung der Schwingkreise in einem mobilen Handgerät integriert sind.

## Claims

1. Electronic measurement device for the detection of leakages of seals or connections on liquid-carrying pipes, whereby the seals or connections have hollow spaces in which are arranged electric sensors which respond to liquid penetrating in and in which the outerlying walls of the hollow space are permeable for electromagnetic waves, characterised by the following features:
a) the sensor is a parallel oscillation circuit (7,21, 26,31,31') the capacitative component of which is alterable by liquid penetrating in;
b) outside of the hollow space is present a transmitter which causes the sensor to resonate;
c) furthermore, outside of the hollow space is present a receiver which detects a change of the resonant oscillations and converts into a signal.

2. Measurement device according to claim 1, characterised in that the electrical oscillation circuit (21) consists of a coaxial cable (36) made as ring or spiral (27) in which the electric outer conductor (22) of the coaxial cable (36) is permeable for the liquid to be detected and acts as coil with one or more windings and the electrically insulated inner conductor (24) forms a capacitator with the outer conductor (22) which is connected parallel to the coil.

3. Measurement device according to claim 1, characterised in that the electrical oscillation circuit (26) consists of a coaxial cable (36) formed as ring or spiral (27) and a parallel-connected, ring-shaped, single or multiple layered coil (28), whereby the coaxial cable (36) acts as condenser due to the capacitative coating between inner conductor (24) and outer conductor (22) and the outer conductor (22) is permeable for the liquid to be detected.

4. Measurement device according to claim 1, characterised in that the electrical oscillation circuit consists of a single or multiple layered coil (31) which represents a capacitance and inductance combined with one another.

5. Measurement device according to one of the preceding claims 1 to 4 in combination with a liquid-conducting pipe, characterised in that the hollow space possesses a seal which has at least two sealing edges or a sealing surface and a sealing edge which is combined with a separate, mechanically not directly coupled parallel oscillation circuit.

6. Measurement device according to one of the preceding claims 1 to 4 in combination with a liquid-carrying pipe, characterised in that the seal, which possesses at least two sealing surfaces (43,43') or two sealing edges or a sealing surface and a sealing edge, is combined with an integrated, mechanically directly coupled parallel oscillation circuit, for example with a double-layered coil (31).

7. Measurement device according to one of the preceding claims 1 to 4 in combination with a liquid-carrying pipe, characterised in that two seals, which each possesses at least two sealing surfaces (48,48',49,49') or each two sealing edges or a sealing surface and a sealing edge and with the generated surface of the pipe (2,3), bounds a flood chamber (8) in which a separate mechanically not directly coupled parallel oscillation circuit is introduced.

8. Measurement device according to one of the preceding claims 1 to 4 in combination with a liquid-carrying pipe, characterised in that the seal possesses at least three sealing elements, such as sealing surfaces or sealing edges, and has two sealing rings (51,52) of equal radius connected with one another by a bridge (59) and are so arranged that a double 0-ring seal (50) results which, with the generated surface of the inner pipe (2) and of the outer pipe (3), bounds two flood chambers (57,58) which are connected with one another by several radially circular canals (56) and that it contains a circular groove (55) for the reception of the oscillation circuit.

9. Measurement device according to claim 1 in combination with a liquid-carrying pipe, characterised in that the hollow space is formed from two radial shaft seals which are connected by means of a rail (63) to give a double radial shaft seal (60) which, with the generated surface of the shaft (18), bound a flood chamber (8) in which is present a device for the reception of an oscillation circuit.

10. Measurement device in combination with a liquid-carrying pipe according to claim 9, characterised in that the rail (63) has a perforation (66) so that the flood chamber (8) is bounded by the seal (65), the shaft (18) and the housing (17).

11. Measurement device according to claim 1 in combination with a liquid-carrying pipe, characterised in that the seal has two ring-shaped circular sealing lips, (71,72) which are so arranged that a double lip seal (67) results which, with the associated sealing edges (68,69) and the generated surface of the inner pipe (2), bounds a flood chamber (8) in which is present a device for the reception of an oscillation circuit.

12. Measurement device in combination with a liquid-carrying pipe according to claim 11, characterised in that the double lip seal (74) has a rail (73) with the perforation (66) so that the flood chamber (8) is bounded by the seal (74) and by the surfaces of the pipes (2) and (3).

13. Measurement device according to claim 1 in combination with a liquid-carrying pipe, characterised in that the hollow space is formed by a seal which, in cross-section, corresponds approximately to an "X", the sealing lips (76,76',77,77') are connected together by a bridge (59) and are so arranged that a double groove ring seal (75) results which, with the corresponding sealing edges (78,78',79,79') and the generated surfaces of the pipes (2,3) bound two flood chambers (57,58) which are connected by several canals (56) and that they contain a circular groove (55) for the reception of an oscillation circuit.

14. Measurement device in combination with a liquid-carrying pipe according to claim 8, characterised in that the seal possesses at least three sealing elements, such as sealing surfaces or sealing edges and a ring (82) smaller in radius and a sealing ring (83) larger in radius and are so arranged that a double 0-ring seal (81) results which, with the generated surfaces of the flanges (84,84'), bound two flood chambers (57,58) which are connected by several canals (56) and that it contains a circular groove (55) for the reception of an oscillation circuit.

15. Measurement device according to claim 1 in combination with a liquid-carrying pipe, characterised in that the seal (87) forms two pairs of circular sealing lips (71,71',72,72') parallel to one another with the corresponding sealing edges (68,68',69,69') which, with the generated surfaces of the pipes (90) and (90'), bound two flood chambers (8,8') in which, in each case, is present a groove (55,55') for the reception of an oscillation circuit.

16. Measurement device in combination with a liquid-carrying pipe according to claim 15, characterised in that the grooves (55,55') are connected with one another by canals (92) in such a manner that a continuous volume of the flood chambers (8,8') is formed which is monitorable with only one oscillation circuit.

17. Measurement device according to claim 1 in combination with a liquid-carrying pipe, characterised in that the parallel oscillation circuit (7) provided in the region of the seal or seals, especially in or next to the seal or seals (5,6) is inductively coupled with a coil (13) which is a component of an electronic measurement unit (12) which is able to determine especially the resonance -frequency of the oscillation circuit (7).

18. Measurement device in combination with a liquid-carrying pipe according to claim 17, characterised in that the coil (40) is present eccentrically outside of the oscillation circuit (31) or that the coil (41) encloses the oscillation circuit (31) from the outside or that the coil (42) is present completely inside the oscillation circuit (31).

19. Measurement device according to claim 1, characterised in that the parallel oscillation circuit (7) provided in the region of the seal or seals, especially in or next to the seal or seals (19), is connected galvanically via a measurement lead (16) with an electronic measurement unit (15) which is able to determine especially the resonance frequency of the oscillation circuit (7).

20. Measurement device-according to claim 1 in combination with a liquid-carrying pipe according to claims 17 and 19, characterised in that several measurement units (12,15) are connected via a data and supply lead (14') to give a measurement chain which pass on the results of their measurements via a data and supply lead (14) to evaluation electronics (11) which undertake an evaluation of the measurement result and indicate in suitable form or pass on the result to a higher ranking place, such as measurement stations.

21. Measurement device according to claim 1 in combination with a liquid-carrying pipe according to one of claims 17 and 18, characterised in that the measurement device (12) is mobilely mounted for the monitoring of the seals (94) combined with the oscillation circuits on a movable base, for example a drain monitoring vehicle (95) and is connected via a data and supply lead (97) with the evaluation electronics which are present in a measurement vehicle.

22. Measurement device according to claim 1 in combination with a liquid-carrying pipe according to claim 17 and 18, characterised in that the measurement device, as well as the evaluation electronics and a suitable indicator device, are integrated in a mobile hand apparatus for the monitoring of the oscillation circuit.

## Revendications

1. Dispositif électronique de mesure pour la détection de défauts d'étanchéité de joints d'étanchéité ou de raccords sur des conduits conduisant des liquides, les joints d'étanchéité ou raccords présentant des espaces vides dans lesquels sont disposés des capteurs électriques qui réagissent à la pénétration du liquide, les parois de l'espace vide situées à l'extérieur étant perméable aux ondes électromagnétiques, caractérisé par les caractéristiques suivantes :
a) le capteur est un circuit oscillant parallèle (7, 21, 26, 31, 31') dont le composant capacitif est modifiable par la pénétration d'un liquide;
b) à l'extérieur de l'espace vide se trouve un émetteur qui place le capteur en résonance;
c) à l'extérieur de l'espace vide se trouve en outre un récepteur qui détecte une modification des oscillations des résonances et la convertit en un signal.

2. Dispositif de mesure selon la revendication 1, caractérisé en ce que le circuit oscillant électrique (21) est constitué d'un câble coaxial (36) configuré en anneau ou en hélice (27), le conducteur électrique extérieur (22) du câble coaxial (36) étant perméable au liquide à détecter et agissant comme bobine à un ou plusieurs enroulements, et le conducteur intérieur (24), électriquement isolé, forme avec le conducteur extérieur (22) une capacité qui est branchée en parallèle à la bobine.

3. Dispositif de mesure selon la revendication 1, caractérisé en ce que le circuit oscillant électrique (26) est constitué d'un câble coaxial (36) configuré en anneau ou en hélice (27) et d'une bobine annulaire (28) branchée en parallèle, en une ou en plusieurs couches, le câble coaxial (36) agissant comme condensateur grâce à la couche capacitive située entre le conducteur intérieur (24) et le conducteur extérieur (22), et le conducteur extérieur (22) étant perméable au liquide à détecter.

4. Dispositif de mesure selon la revendication 1, caractérisé en ce que le circuit oscillant électrique est constitué d'une bobine (31) en une ou plusieurs couches qui représente une capacité et une inductivité combinées l'une à l'autre.

5. Dispositif de mesure selon l'une des revendications précédentes 1 à 4, en combinaison avec un conduit conduisant des liquides, caractérisé en ce que l'espace vide est doté d'un joint d'étanchéité qui possède au moins deux surfaces d'étanchéité (43, 43') ou deux bords d'étanchéité, ou une surface d'étanchéité et un bord d'étanchéité, lequel joint d'étanchéité est combiné à un circuit oscillant parallèle séparé couplé mécaniquement de manière non directe.

6. Dispositif de mesure selon l'une des revendications précédentes 1 à 4, en combinaison avec un conduit conduisant des liquides, caractérisé en ce que le joint d'étanchéité qui possède au moins deux surfaces d'étanchéité (43, 43') ou deux bords d'étanchéité, ou une surface d'étanchéité et un bord d'étanchéité, est combiné à un circuit oscillant parallèle intégré couplé mécaniquement de manière directe, par exemple une bobine (31) en double couche.

7. Dispositif de mesure selon l'une des revendications précédentes 1 à 4, en combinaison avec un conduit conduisant des liquides, caractérisé en ce que deux joints d'étanchéité qui présentent chacun au moins deux surfaces d'étanchéité (48, 48', 49, 49') ou chacun deux bords d'étanchéité, ou une surface d'étanchéité et un bord d'étanchéité, délimitent avec les surfaces d'enveloppe des tubes (2, 3) une chambre de remplissage (8) dans laquelle est installé un circuit oscillant parallèle séparé couplé mécaniquement de manière non directe.

8. Dispositif de mesure selon l'une des revendications précédentes 1 à 4, en combinaison avec un conduit conduisant des liquides, caractérisé en ce que le joint d'étanchéité possède au moins trois éléments d'étanchéité tels que des surfaces d'étanchéité ou des bords d'étanchéité et présente deux anneaux d'étanchéité (51, 52) de même rayon reliés l'un à l'autre par une traverse (59) et disposés de telle sorte que l'on obtienne un double joint d'étanchéité torique (50) qui délimite avec les surfaces d'enveloppe du tube intérieur (2) et du tube extérieur (3) deux chambres de remplissage (57, 58) qui sont reliées l'une à l'autre par plusieurs canaux (56) périphériques radiaux, et en ce qu'il contient une rainure périphérique (55) pour la réception du circuit oscillant.

9. Dispositif de mesure selon la revendication 1, en combinaison avec un conduit conduisant des liquides, caractérisé en ce que l'espace vide est formé par deux joints d'étanchéité à arbre radial qui sont reliés au moyen d'un rail (63) en un double joint d'étanchéité à arbre radial (60) et qui délimitent avec la surface d'enveloppe de l'arbre (18) une chambre de remplissage (8) dans laquelle se trouve un dispositif de réception d'un circuit oscillant.

10. Dispositif de mesure en combinaison avec un conduit conduisant des liquides, selon la revendication 9, caractérisé en ce que le rail (63) présente une perforation (66), de telle sorte que la chambre de remplissage (8) est délimitée par le joint d'étanchéité (65), l'arbre (18) et le boîtier (17).

11. Dispositif de mesure selon la revendication 1, en combinaison avec un conduit conduisant des liquides, caractérisé en ce que le joint d'étanchéité présente deux lèvres d'étanchéité (71, 72) périphériques annulaires qui sont disposées de manière à fournir un joint d'étanchéité à double lèvre (67) qui délimite avec les bords d'étanchéité (68, 69) associés et à la surface d'enveloppe du tube intérieur (2) une chambre de remplissage (8) dans laquelle se trouve un dispositif de réception d'un circuit oscillant.

12. Dispositif de mesure en combinaison avec un conduit conduisant des liquides, selon la revendication 11, caractérisé en ce que le joint d'étanchéité à double lèvre (74) présente un rail (73) doté de la perforation (66), de sorte que la chambre de remplissage (8) est délimitée par le joint d'étanchéité (74) et par la surface d'enveloppe des tubes (2) et (3).

13. Dispositif de mesure selon la revendication 1, en combinaison avec un conduit conduisant des liquides, caractérisé en ce que l'espace vide est formé par un joint d'étanchéité dont la section transversale correspond sensiblement à un "X" et dont les lèvres d'étanchéité (76, 76', 77, 77') sont reliées l'une à l'autre par une traverse (59) et sont disposées de telle sorte que l'on obtient un double joint d'étanchéité en U à lèvres (75), qui délimite avec les bords d'étanchéité (78, 78', 79, 79') correspondants et la surface d'enveloppe des tubes (2, 3) deux chambres de remplissage (57, 58) qui sont reliées par plusieurs canaux périphériques radiaux (56) et en ce que le joint d'étanchéité contient une rainure périphérique (55) pour la réception d'un circuit oscillant.

14. Dispositif de mesure en combinaison avec un conduit conduisant des liquides, selon la revendication 8, caractérisé en ce que le joint d'étanchéité possède au moins trois éléments d'étanchéité tels que des surfaces d'étanchéité ou des bords d'étanchéité et présente un anneau d'étanchéité (82) de petit diamètre et un anneau d'étanchéité (83) de grand diamètre qui sont disposés de telle sorte que l'on obtient un double joint d'étanchéité torique (81) qui délimite avec les surfaces d'enveloppe de la bride (84, 84') deux chambres de remplissage (57, 58) qui sont reliées par plusieurs canaux (56), et en ce que le joint d'étanchéité contient une rainure périphérique (55) pour la réception d'un circuit oscillant.

15. Dispositif de mesure selon la revendication 1, en combinaison avec un conduit conduisant des liquides, caractérisé en ce que le joint d'étanchéité (87) forme deux paires de lèvres d'étanchéité (71, 71', 72, 72') périphériques parallèles l'une à l'autre et dotées des bords d'étanchéité (68, 68', 69, 69') correspondants qui délimitent avec les surfaces d'enveloppe des tubes (90) et (90') deux chambres de remplissage (8, 8') dans chacune desquelles se trouve une rainure (55, 55') de réception d'un circuit oscillant.

16. Dispositif de mesure en combinaison avec un conduit conduisant des liquides, selon la revendication 15, caractérisé en ce que les rainures (55, 55') sont reliées l'une à l'autre par des canaux (92) de manière à former un volume continu des chambres de remplissage (8, 8') qui peut être surveillé avec un seul circuit oscillant.

17. Dispositif de mesure selon la revendication 1, en combinaison avec un conduit conduisant des liquides, caractérisé en ce que le circuit oscillant parallèle (7) installé dans la zone du joint d'étanchéité resp. des joints d'étanchéité, en particulier dans ou à côté du resp. des joints d'étanchéité (5, 6), est couplé inductivement à une bobine (13) qui constitue un composant d'une unité électronique de mesure (12) qui est en particulier en mesure de détecter la fréquence de résonance du circuit oscillant (7).

18. Dispositif de mesure en combinaison avec un conduit conduisant des liquides, selon la revendication 17, caractérisé en ce que la bobine (40) est située excentriquement à l'extérieur du circuit oscillant (31), ou en ce que la bobine (41) entoure par l'extérieur le circuit oscillant (31), ou en ce que la bobine (42) se trouve entièrement à l'intérieur du circuit oscillant (31).

19. Dispositif de mesure selon la revendication 1, caractérisé en ce que le circuit oscillant parallèle (7) installé dans la zone du joint d'étanchéité resp. des joints d'étanchéité, en particulier dans ou à côté du ou des joints d'étanchéité (19), est raccordé galvaniquement par l'intermédiaire d'un conducteur de mesure (16) à une unité électronique de mesure (15) qui est en particulier en mesure de détecter la fréquence de résonance du circuit oscillant (7).

20. Dispositif de mesure selon la revendication 1, en combinaison avec un conduit conduisant des liquides, selon les revendications 17 et 19, caractérisé en ce que plusieurs unités de mesure (12, 15) sont reliées par l'intermédiaire d'un conducteur de données et d'alimentation (14') en une chaîne de mesure qui transmet par l'intermédiaire d'un conducteur de données et d'alimentation (14) les résultats de leur mesure à une électronique d'évaluation (11) qui assure l'évaluation du résultat de mesure et l'affiche sous forme appropriée, ou qui transfère le résultat à un emplacement situé en amont, par exemple un poste de mesurage.

21. Dispositif de mesure selon la revendication 1, en combinaison avec un conduit conduisant des liquides, selon l'une des revendications 17 et 18, caractérisé en ce que, pour la surveillance des joints d'étanchéité (94) combinés aux circuits oscillants, le dispositif de mesure (12) est monté mobile sur un socle déplaçable, par exemple un véhicule (95) de surveillance de canalisations, et est relié par l'intermédiaire d'un conducteur de données et d'alimentation (97) à l'électronique d'évaluation (11) qui se trouve dans un véhicule de mesure (98).

22. Dispositif de mesure selon la revendication 1, en combinaison avec un conduit conduisant des liquides, selon la revendication 17 et 18, caractérisé en ce que le dispositif de mesure ainsi que l'électronique d'évaluation et un dispositif approprié d'affichage pour la surveillance des circuits oscillants sont intégrés dans un appareil manuel mobile.
